# EUROPEAN PATENT APPLICATION

(11) **EP 4 660 472 A1**
(43) Date of publication of application: **10.12.2025**
(21) Application number: 25175103.8
(22) Date of filing: 08.05.2025
(51) Int. Cl.: F16C 23/08, F16C 33/58, F16C 33/72, F16C 33/78, F16C 33/80

(54) **SUPPORT ASSEMBLY FOR FOOD APPLICATIONS**

(30) Priority: 05.06.2024 IT 202400012937
(71) Applicant: Aktiebolaget SKF, 415 50 Göteborg (SE)
(72) Inventor: Frezza, Pasquale, 81031 Aversa (CE) (IT); Bertolini, Andrea A, 54033 Carrara (IT); Berti, Renato, 54100 Massa (IT)
(74) Representative: Kohl, Thomas

(57) **Abstract**

Support assembly (10) for movable shafts, having a bearing unit (30), provided with a stationary radially outer ring (31) and a rotatable radially inner ring (33), and engaged by the movable shaft, and a sealing device (40), which closes the bearing unit in a fluid-tight manner, and is in turn provided with an annular first sealing element (60) made of elastomeric material and integral with the radially outer ring,
the support assembly is also provided with:
- a cover (70) made of plastic material, which is overall cup-shaped, is integral with the radially inner ring , and has a substantially cylindrical shaped side wall (73) with an annular portion at one end (74), and
- an annular second sealing element (80) made of elastomeric material which is fully supported by the annular portion of the cover and co-moulded thereon.

## Description

### Technical field of the invention

The present invention relates to a support assembly for food applications. In particular, the present invention relates to a support assembly for food applications in which the support assembly is secured to a machine frame and intended to support movable, for example rotating, shafts by means of a suitable bearing unit.

### Prior art

As is known, in the food and beverage (F&B) industry there is increasing focus on the development of new machines and machine designs aimed at improving the safety and quality of food.

As is also known, the machines used in the food and beverage industry have many moving parts supported by rotating shafts, for example, conveyor belts, dough mixers, or machines for washing fresh produce.

All these machines must be frequently cleaned, often with water with added detergents and/or disinfectants, in order to control the growth of any bacteria that could contaminate the food. In particular, it is essential that these machines do not have crevices or other areas where dirt, or even just washing water, can get in and stagnate. This is because the stagnation of liquids or moisture promotes the proliferation of bacteria.

This is a particular problem in support assemblies for movable shafts, which may be end supports that receive an end of the shaft, or through supports. Such support assemblies are made up of a casing, usually annular, having a base or flange for fastening to the machine, a bearing unit, located inside the casing and coupled to the movable shaft, and a cover, normally cup-shaped, which is force-fitted on the casing.

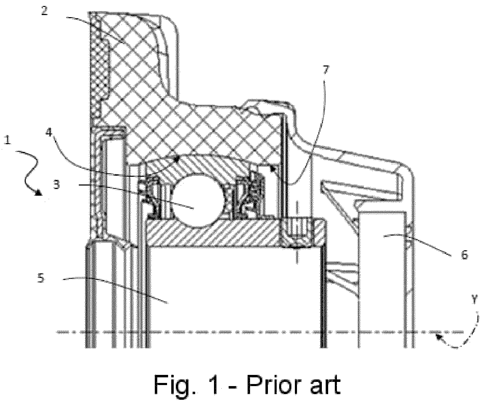

An embodiment of a support assembly according to the prior art is shown in Figure 1. The support assembly 1 comprises a bearing unit 3, for example a roller bearing of known type, able to receive in a known manner a movable, for example rotating, shaft 5 so as to support the latter, and a casing 2 having a through seat 4 in which the bearing unit 3 is received stably in a known manner.

The support assembly 1 is in particular intended to be mounted on machinery for the food and beverage industry. The casing 2 has an overall annular shape and is designed in such a way as to be able to receive the bearing unit 3 inside it, in particular in the through seat 4, in a known manner. The seat 4 generally has an axis of symmetry Y which is also the axis of symmetry of the casing 2. In any case, the support assembly 1 always also has a cover 6 for closing an inlet 7 of the through seat 4 of the casing 2 in a fluid-tight manner.

Therefore, in F&B applications, the cover is mounted on the casing and this anchoring creates a static seal. However, this type of seal does not guarantee a compact solution, or enable working conditions to be monitored over time. Moreover, the cover is usually closed at the bottom and it is therefore not possible to pass the shaft through the cover itself. Lastly, a further disadvantage is that misalignments can cause the shaft to touch the cover and damage it.

### Summary of the invention

The present invention provides a support assembly for food applications, in particular, a support assembly for a rotating shaft and associated bearing unit, secured to a machine frame, which provides a seal against contaminants and/or washing, the seal being applied directly to the bearing unit.

Therefore, the present invention provides a support assembly for food applications having the features set out in the independent claim attached to the present description.

Further embodiments of the invention, which are preferred and/or particularly advantageous, are described according to the features set out in the appended dependent claims.

### Brief description of the drawings

The invention is described below with reference to the attached drawings showing a non-limiting example embodiment thereof, in which:
- Figure 1 shows, in cross section, a support assembly produced according to the prior art,
- Figure 2 shows, in cross section, a support assembly according to an embodiment of the present invention,
- Figure 3 shows, on an enlarged scale, a detail of Figure 2,
- Figure 4 shows a detail of a cover and of an inner ring of the support assembly in Figure 2, and
- Figure 5 shows the radially inner ring of the support assembly in Figure 2.

### Detailed description

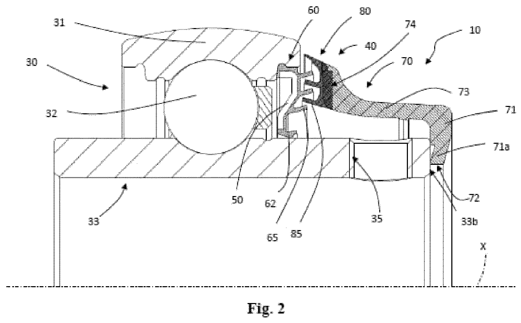

Purely by way of non-limiting example and with reference to Figure 2, reference sign 10 designates, as a whole, a support assembly for movable, rotating shafts, which are not shown for the sake of simplicity.

The support assembly 10 comprises a bearing unit 30, for example a rolling bearing of known type, able to receive in a known manner a movable, for example rotating, shaft so as to support the latter, and a casing, also of a known type and therefore not illustrated, in which the bearing unit 30 is received stably in a known manner.

Throughout the present description and in the claims, terms and expressions indicating positions and directions such as "radial", "axial" or "transverse", are to be understood with reference to the axis of rotation X of the bearing unit and of the support assembly itself.

The bearing unit 30 is provided with:
- a radially outer ring 31, preferably stationary,
- a radially inner ring 33, preferably rotatable around the axis of rotation X of the bearing unit 30, and stably connected to the shaft by one or more known fastening means, for example seated in one or more holes 35, and
- a row of rolling elements 32, in this case balls, interposed between the radially outer ring 31 and the radially inner ring 33.

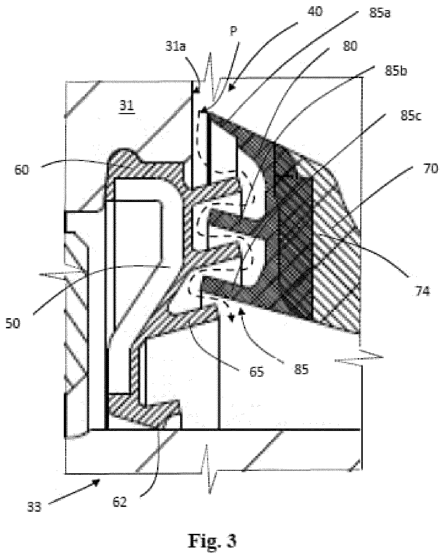

According to this invention and also with reference to Figure 3, sealing against external contaminants and washing water is ensured by the fact that the support assembly 10 comprises a sealing device 40 able to seal the bearing unit 30 in a fluid-tight manner, as explained below. The sealing device 40 is positioned on the same side as the fastening hole 35 in relation to the bearing unit 30 and comprises:
- a shaped metal shield 50, stably fastened to the radially outer ring 31 and therefore stationary,
- an annular first sealing element 60 made of elastomeric material, which is fully supported by the shield 50 and has a radially inner contacting lip 62 making sliding contact (and therefore a seal) with the radially inner ring 33,
- a cover 70 made of plastic material which is overall cup-shaped and comprises a bottom wall 71 and a side wall 73 which is shaped but substantially cylindrical and integrally connected to the bottom wall 71, and
- an annular second sealing element 80 made of elastomeric material which is fully supported by the cover 70 and is co-moulded onto it. In particular, the second sealing element 80 is co-moulded on an annular portion 74 of the lateral portion 73, which is distal relative to the bottom wall 71.

The cover 70 is preferably made of plastic, for example thermoplastic polyurethane (TPU) with a Shore A hardness of approximately 60, i.e. in the *"medium hard"* range. This hardness allows the cover to be gripped without being deformed and therefore allows the assembly operations to be carried out correctly. On the other hand, the sealing element 80 is made of a different material, for example polytetrafluoroethylene. This material has a lower Shore A hardness of 55, i.e. in the *soft* range that covers very soft materials.

The cover 70 is "open" in that the bottom wall 71 is provided with a radially internal frame 71a which defines a circular opening 72 for the passage of the rotary shaft. The frame 71a is more flexible than the bottom wall 71 to rest axially on an annular surface 33b of the ring 33. As further explained below, the cover 70 is integral with the radially inner ring 33 of the bearing unit 30 and is therefore a rotary component.

The first sealing element 60 and the second sealing element 80 have a first plurality of non-contacting annular sealing lips 65 and a second plurality of non-contacting annular sealing lips 85 respectively, which are arranged at an oblique angle to the axis X of symmetry so as to move away from the axis X of symmetry, and are arranged to alternate radially and to overlap axially, but are also radially and axially separated, i.e. removed from each other with no points of contact. Preferably, the first plurality of lips 65 comprises three annular lips and the second plurality of lips 85 comprises two annular lips. In particular, a first lip 85b and a second lip 85c of the second plurality of lips 85 axially and radially overlap respective pairs of lips of the first plurality of lips 65.

In addition, the sealing element 80 has an annular baffle plate 85a radially outside the lips 85b and 85c, which extends towards an annular surface 31a of the outer ring 31 and acts as a deflector for washing water and other contaminants. Due to the softer material used to make the sealing element 80, the flexibility of the lips is different to the rest of the cover.

Ultimately, the first plurality of lips 65 and the second plurality of lips 85 define, from the baffle plate 85a and in a radially inward direction towards the axis X, a winding and tortuous path P that makes it difficult for washing fluids or other impurities to enter the bearing unit 30 and that at the same time facilitates the expulsion of any washing fluids or other impurities that have infiltrated the path P. Ultimately, the winding and tortuous path P defines a very effective dynamic seal.

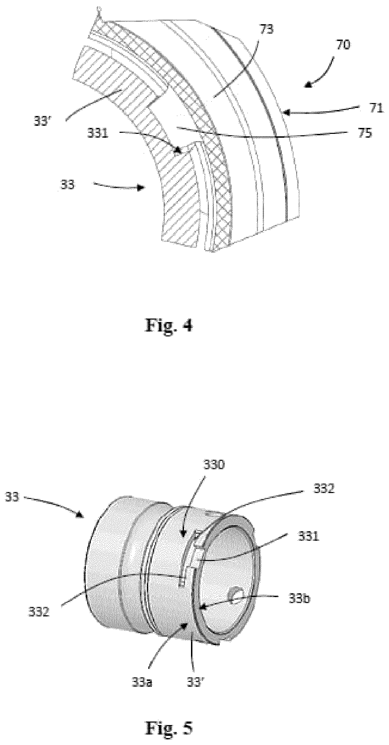

With reference to Figures 4 and 5, the cover 70 is integral with an end portion 33' of the radially inner ring 33 of the bearing unit 30. This anchoring is achieved by means of a plurality of teeth on the cover which are able to engage with a corresponding plurality of annular seats on the radially inner ring.

Indeed, the side wall 73 of the cover 70 has, radially on the inside, a plurality of teeth 75 projecting radially inwards from the cover 70 and spaced apart circumferentially from one another, each extending over a limited circumferential segment of the side wall.

In combination with the teeth 75 on the cover 70, a radially outer lateral surface 33a of the end portion 33' of the radially inner ring 33 has a corresponding plurality of annular seats 330 for receiving the teeth 75 on the cover 70. Each annular seat 330 consists of an inlet groove 331 spaced apart axially with respect to the annular surface 33b of the radially inner ring 33 and interrupting radially at least part of the annular surface 33b of the radially inner ring 33; each annular seat 330 further comprises a pair of anchoring grooves 332 arranged on the opposite side to the inlet groove 331, which engage in use with the teeth 75 on the cover 70, anchoring the latter to the bearing unit 30.

Preferably, the plurality of teeth 75 and the corresponding plurality of annular seats 330 are three in number and the teeth 75 and the annular seats 330 are spaced apart from one another by 120°.

In practice, during the assembly phase the cover 70 is first brought together with the bearing unit 30 axially, in such a way that its teeth 75 engage with the corresponding inlet grooves 331 of the annular seats 330. Next, the cover 70 is rotated clockwise or anticlockwise such that its teeth 75 enter the anchoring grooves 332, creating a stable "bayonet" coupling.

Therefore, compared to known solutions, the present invention saves one component, namely the cover, which is replaced by the elastomer cover. The radial and axial dimensions of the cover are smaller than the cover in known solutions. The reduced radial dimensions are linked to the fact that the cover does not engage with the casing but rather with the bearing unit 30 which is radially contained inside the casing, while the reduced axial dimensions are due to the fact that the cover may be an open cover, i.e. a cover with no axial closing base.

The solution according to the present invention is therefore characterized in that it defines a seal directly on the bearing unit and therefore defines a novel component, the cover, which replaces the cover in known solutions. In addition, the novel shape of the radially inner ring enables these two components to be anchored together. This novel solution affords many advantages:
- the dynamic seal of the sealing device with the cover, provided by the plurality of pairs of sealing lips, makes it possible to centrifuge the washing water and/or contaminants and thus create a seal which is more efficient than the static seals between the cover and casing, as found in the prior art;
- it is possible to use a component, the cover, with an open bottom wall for passage of the shaft;
- it is possible for the cover and in particular its coupling portion with the second sealing element to be so dimensioned as to prevent contact with the casing, even in instances of maximum angular misalignment (generally no greater than 3°) between the shaft and the casing;

- enhanced removability of the bearing unit;
- enhanced adaptability of the bearing units within the specific application without the need to produce a special casing.

There are numerous other variants in addition to the embodiment of the invention described above. Furthermore, said embodiments are merely examples that limit neither the scope nor the application nor the possible arrangements of the invention. Indeed, although the above description enables a person skilled in the art to carry out the present invention according to at least one example embodiment thereof, many variants of the described components can also be used without thereby departing from the scope of the invention as defined in the attached claims, which should be understood literally and/or according to the legal equivalents thereof.

## Claims

1. Support assembly (10) for movable shafts, the support assembly comprising a bearing unit (30), provided with a radially outer ring (31), stationary, and a radially inner ring (33), rotatable, and engaged by the movable shaft, and a sealing device (40), which closes the bearing unit (30) itself in a fluid-tight manner, and includes, in turn, a first sealing element (60), annular and made of elastomeric material, integral with the radially outer ring (31),
the support assembly (10) being **characterized in that** the sealing device (40) further comprises:
- a cover (70) made of plastic material, which is overall shaped like a cup, is integral with the radially inner ring (33), and has a side wall (73), shaped and substantially cylindrical, having an annular portion (74) at one end, and
- a second sealing element (80), annular and made of elastomeric material which is fully supported by the annular portion (74) of the cover (70) and is co-moulded onto it.

2. Support assembly (10) according to claim 1, wherein the first (60) and the second sealing element (80) are both provided with a plurality of annular sealing lips (65, 85) which correspond to each other forming respective pairs of lips, and the lips of each pair of annular sealing lips are radially and axially overlapped, but also radially and axially separated.

3. Support assembly (10) according to claim 1 or 2, wherein a baffle plate (85a) of the sealing element (80), annular and radially external with respect to the lips (85), extends towards an annular surface (31a) of the radially outer ring (31).

4. Support assembly (10) according to any of the preceding claims, wherein the cover (70) is made of thermoplastic polyurethane.

5. Support assembly (10) according to any of the previous claims, wherein the second sealing element (80) is made of polytetrafluoroethylene.

6. Support assembly (10) according to any of the previous claims, wherein the cover (70) includes a bottom wall (71), integrally connected to the side wall (73).

7. Support assembly (10) according to claim 1, wherein the bottom wall (71) is provided with a frame (71a), radially internal, which defines a circular opening (72) for the passage of the movable shaft.

8. Support assembly (10) according to any of the previous claims, wherein the first sealing element (60) has a radially internal contacting lip (62) which makes sliding contact with the radially inner ring (33).

9. Support assembly (10) according to any of the previous claims, wherein the side wall (73) of the cover (70) is provided radially on the inside with a plurality of teeth (75).

10. Support assembly (10) according to claim 9, wherein a radially external lateral surface (33a) of the radially inner ring (33) is provided with a corresponding plurality of annular seats (330) configured to receive the teeth (75) of the cover (70) so that in use the teeth (75) and the annular seats (330) securely anchor the cover (70) to the radially inner ring (33) of the bearing unit (30).
